# EUROPEAN PATENT SPECIFICATION

(11) **EP 1 535 167 B1**
(45) Date of publication and mention of the grant of the patent: **14.12.2005**
(21) Application number: 02756003.6
(22) Date of filing: 06.09.2002
(51) Int. Cl.: G06F 13/40, H04Q 11/04

(54) **SWITCHING ARRANGEMENT INCLUDING TIME-SLOT BUSES AND SEVERAL BUFFERS**
SCHALTANORDNUNG, DIE ZEITSCHLITZBUSLEITUNGEN UND PUFFER BEINHALTEN
SYSTEME DE COMMUTATION COMPRENANT DES BUS D'INTERVALLES DE TEMPS ET PLUSIEURS TAMPONS

(43) Date of publication of application: 01.06.2005
(73) Proprietor: TELEFONAKTIEBOLAGET LM ERICSSON (publ), 164 83 Stockholm (SE)
(72) Inventor: WEGO, Arild, N-3400 Lier (NO); HELLUM, Paal, Longva, N-1365 Blommenholm (NO)
(74) Representative: Kühn, Friedrich Heinrich
(86) International application number: PCT/NO2002/000313
(87) International publication number: WO 2004/023319

(56) References cited:
- WO-A-97/03526
- WO-A-99/33278
- US-A- 4 791 629
- YUM T -S ET AL: "A TDM-based multibus packet switch" IEEE INFOCOM '92: CONFERENCE ON COMPUTER COMMUNICATIONS. ELEVENTH ANNUAL JOINT CONFERENCE OF THE IEEE COMPUTER AND COMMUNICATIONS SOCIETIES (CAT. NO.92CH3133-6), FLORENCE, ITALY, 4-8 MAY 1992, pages 2509-2515 vol.3, XP002238213 1992, New York, NY, USA, IEEE, USA ISBN: 0-7803-0602-3

## Description

### Field of the invention

The present invention is related to data nodes in communication networks, in particular to transmitting independent serial data streams through synchronous Time Division Multiplexing (TDM) switches.

### Background of the invention

The lower layer of communication networks like the connectivity layer in a core network of a cellular environment could be seen as a layer of distributed resources for managing data flows. Switches and multiplexers are some of the main components for this purpose. In complex communication networks managing data of different formats and varying data rates, it is of great importance that the construction of the components are flexible without being too complex.

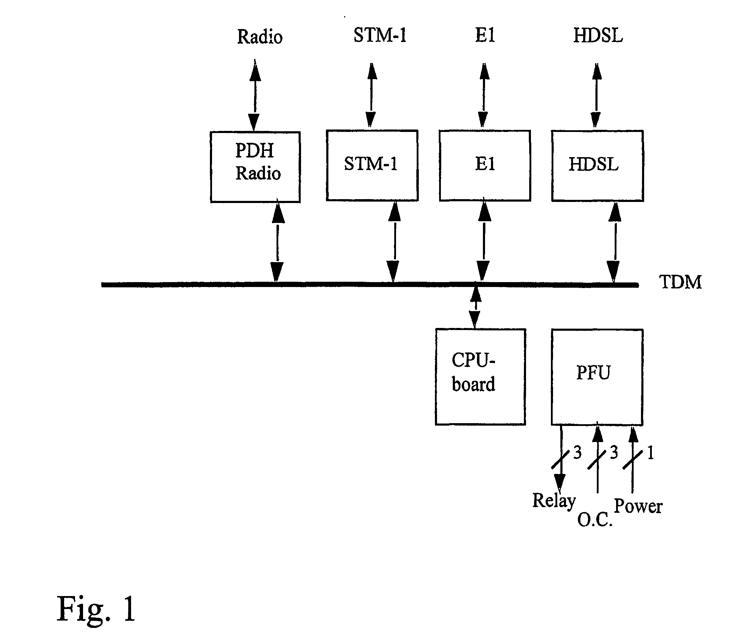

Conventionally, the switches comprise a number of serial inputs and outputs. The data stream of one input may be directed in its entirety to a certain output line, or it may consist of a mixture of time division multiplexed data frames that are to be distributed to several outputs. The different lines may be running various interfaces, e.g. E1, E2, E3 and STM-1 (figure 1). Additionally, the data speed of each input line may vary in a wide range. The transition of data frames in the switches is often executed by means of time slot buses (TDMs) located on the back plane of the switches. A TDM bus has a total capacity in the size typically about 1Gbit/s, where each time slot contains 64kbit of data.

A traditional TDM-bus application consists of a data bus (usually 8 bits), a data clock and a frame synchronisation signal. The time domain is divided into frames where each frame has a fixed duration (usually 125 µs). A frame synchronisation signal indicates the start of each frame and has a period as long as the frame duration. The frame synchronisation signal and the data clock come from a synchronisation master source and form the timing master signals for all transmitters and receivers that are communicating via the TDM-bus. The frames are divided into a fixed number (n) of time slots (TS) identified by local time-slot counters. The local time-slot counters are reset by the FS signal. In each TS, data may be transmitted from a transmitter to a receiver using time division multiplexing (TDM) . Serial data coming from data lines are paralleled (8 bits) so that the data can be mapped into the time slots.

In prior-art implementations of components as described above, there are limitations in the flexibility of synchronous digital switches with respect to minimum delay and configuration flexibility when combined with a non-blocking concept, multi-slot switching, high capacity and high reliability.

The international patent application WO 99/59276 describes a synchronous digital switch with improvements compared with commercial available components using switching matrix schemes with a centralised architecture.

The addressing method given in WO 99/59276 is superficially described. Using only a 2-bit RAM for each timeslot gives a limitation on how timeslots can be cross connected (switched) between two line boards. It is, for instance, not described how to change the order of the time slots.

The patent publication US-A-4 791 629 discloses a node of a communication network, said node comprising one time-slot bus transferring frames from a number of serial input lines located on a receiving side of the node to a number of serial output lines located on the transmitting side of the node into two data buffers for each time-slot bus at the receiving side for buffering the frames from the input lines before transmission.

### Summary of the invention

It is an object of the present invention to provide an arrangement that eliminates the drawbacks described above. The features defined in the claims enclosed characterize this method.

### Brief description of the drawings

In order to make the invention more readily understandable, the discussion that follows will refer to the accompanying drawings.
Figure 1 is a block diagram illustrating an example of serial output/input lines with variable interfaces connected to a TDM bus, e.g. in a switch,
Figure 2 shows how pointers are allocating the memory space of a TDM buffer according to the present invention,
Figure 3 shows three different TDM buffer blocks with associated connection tables at the receiving side of three TDM buses,
Figure 4 shows an example of an entry in a connection table at the receiving side of the TDM buses according to the present invention,
Figure 5 shows three different TDM buffer blocks and one shared connection table at the transmitting side of three TDM buses,
Figure 6 shows an example of an entry in a connection tables at the transmitting side of the TDM buses according to the present invention.

### Detailed description of preferred embodiments

In the following, a preferred embodiment of the present invention will be described. This is just one of many embodiments and variations within the scope of the invention defined by the independent claims enclosed, and must not be considered as limiting.

The preferred embodiment resides in a switch with I/O lines of various interfaces as shown in figure 1. There are three buses in the back plane, and the incoming data shall be distributed among them. There are 8192 time slots per frame available on each bus (66MHz), which makes 24576 time slots all together.

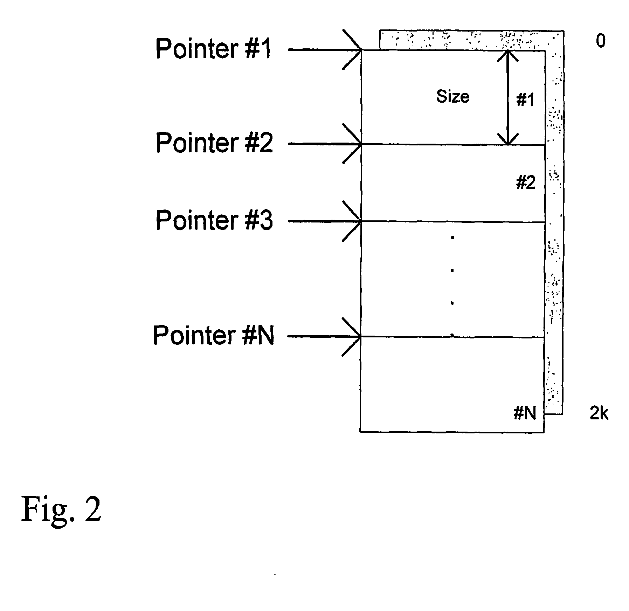

The incoming data will be buffered in one set of memory blocks for each bus. The physical size of the memory blocks is set at 2048 bytes, which means that the system can handle a maximum of 2048 different bytes (time slots) per frame. The memories are configured in advance with a pointer value for every active line as illustrated in figure 2.

The pointer value holds the address where the first byte in a frame is supposed to be stored. This address is loaded into a local pointer at the start of a new frame, and the pointer is incremented after data has been written to this address. The memory can be shared by 32 different lines, but can also be occupied by only one.

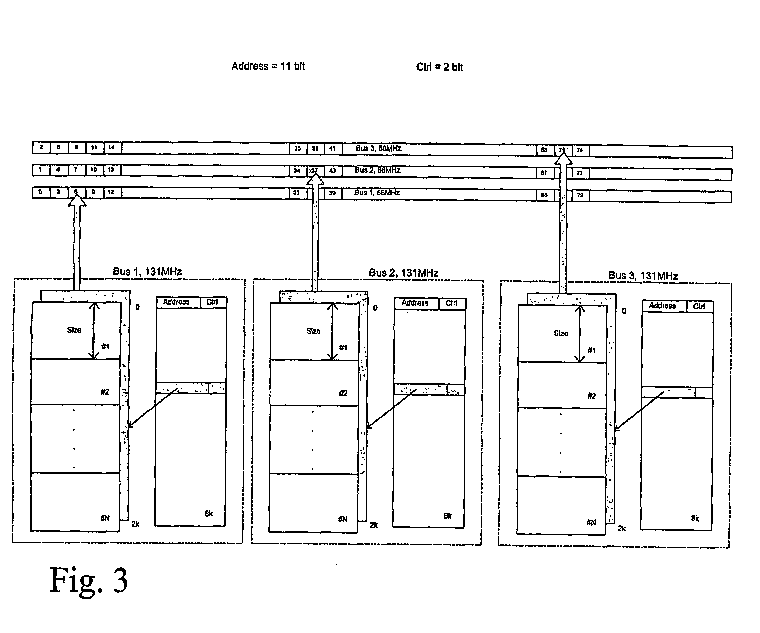

Referring to figure 3, in addition to the memory blocks, there is one connection table associated with each, containing 8192 entries. Each entry has one address field and one control field. The address field points to the location in the memory where the data that are to be read from the memory can be found, while the control field holds information about e.g. whether the current timeslot is enabled, whether it is a minimum delay timeslot, etc.

When reading data from the memories, a time-slot counter is used to index the connection tables. The counter is synchronized to the bus clock, and is incremented along with the time-slots in the back plane. The back plane bus can transfer three different bytes at a time (one byte per bus), so the current connection table entry will relate to timeslots x, x+1, and x+2 in parallel.

The order of the bytes with which they are placed on the bus is the same as the order of their associated addresses in the connection table. Thus, the byte sequence of the TDM buses, and hence also the switching of data from input to output lines are controlled by where the addresses are stored in the connection table. This is pre-arranged by software according to the switching requirements concerned.

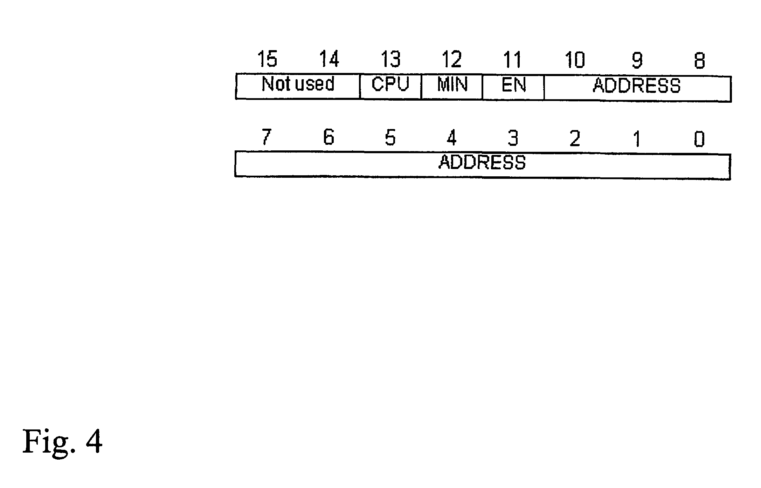

An entry in the connection table of the receiving side is shown in figure 4. The entry consists of the following fields:
- **ADDRESS**: addressing a byte in a memory block
- **EN**: enable time slot. Set to '1' if the time slot is enabled and the corresponding data shall be put onto the back plane bus.
- **MIN**: Indicates if the timeslot is minimum delay.
- **CPU**: Indicates if data should be fetched from a CPU register

The term "minimum delay" expresses a mode of the switch in which fast data transfer is given high priority. In normal delay mode, data is stored in one frame and put on the bus in the next one. In other words, two memories are required, each containing 2048 bytes. However, in minimum delay mode, only one memory is required, since data shall be put onto the bus as fast as possible. The software programmer has to make sure that within in the same frame, a data location is not read before write-in. Minimum delay should be configured on line level and not on time-slot level.

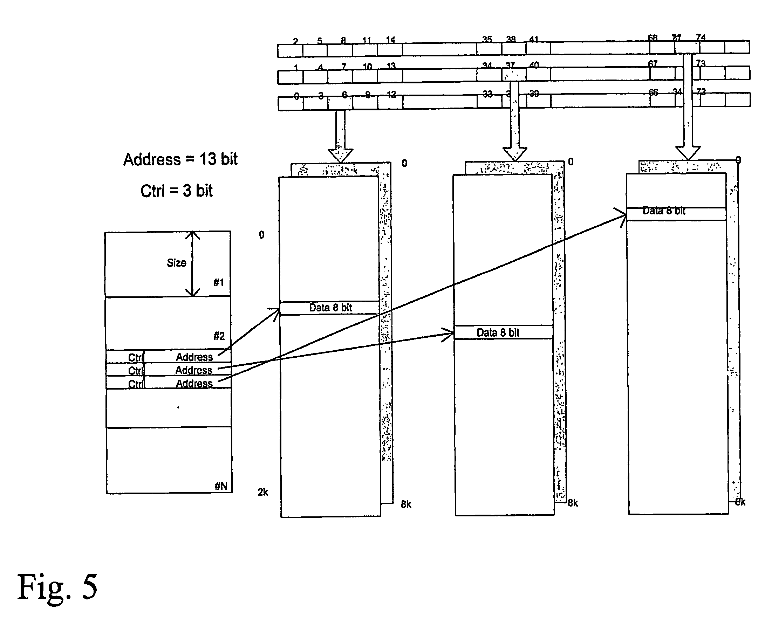

So far, only the receiving side of the TDM buses has been described. According to the present invention, a similar architecture is present at the transmitting side, as shown in figure 5. The modules shown are responsible for storing data coming from the back plane bus, and pass it on to the outgoing lines.

As already mentioned, there are three buses in the back plane, and each of them can have 8192 time slots (66 MHz). This makes 24576 time slots all together. The data coming from the back plane will go to one memory block per bus, and a connection table then addresses these memories. As opposed to the receiving side, there is only one connection table, and not one per bus. However, the transmitting side connection table also contains addresses and control bits. The addresses are used to point to locations in the memory blocks, while the control bits can be used to set minimum delay.

The size of the connection table is set at 2048 bytes, which means that the system can handle a maximum of 2048 different bytes per frame. The connection table is configured in advance with a size parameter and a pointer value for every active output line. The pointer value holds the address where the first memory address can be found. This pointer value is loaded into a local pointer at the start of a new frame, and the pointer is incremented after data has been fetched from the location the pointer is addressing. The connection table can be shared by 32 different lines, but can also be occupied by only one. The size parameter controls the connection table allocation.

A timeslot counter is used to index the large memory when fetching data from the back plane bus. Since there are three buses, three data bytes have to be fetched in parallel. The order of the addresses in each part of the connection table then controls the output order of the corresponding bytes in the respective output lines.

Also, at the transmitting side, minimum delay means that only one memory block per TDM bus is used, since data shall be put onto the bus as fast as possible. The software programmer has to make sure that a data location is not read before write-in within in the same frame.

32 dedicated CPU registers are available for storing idle pattern data. These patterns can be sent out on the serial lines.

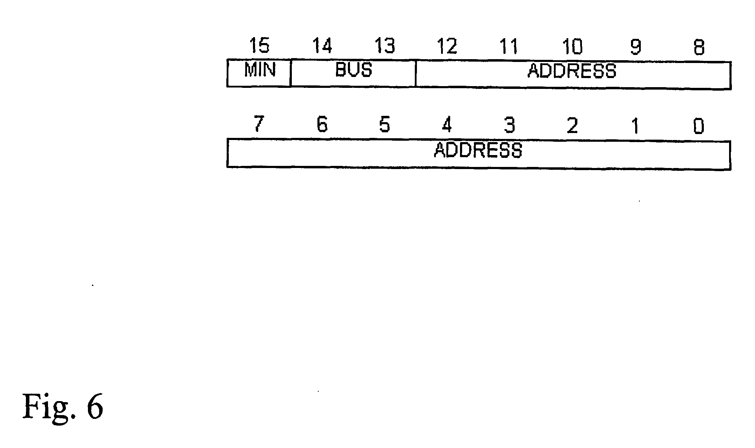

An entry in the connection table of the transmitting side is shown in figure 6. The entry consists the following fields:
- **ADDRESS**: the addressing of the RAM
- **MIN**: Indicates if the timeslot is minimum delay
- **BUS**: "00" - fetch data from bus 1
"01" - fetch data from bus 2
"10" - fetch data from bus 3
"11" - fetch data from a CPU register

The present invention provides full flexibility to cross connect time slots, and any combinations of time slots can be transferred between lines (changed order and number of time slots) depending on how the connection tables are configured to write to and read from the TDM bus.

Further, the delay through the node can be very low when using minimum delay. In fact, it can be less than 40µs? for a 2Mbit/s connection. In minimum delay mode, the system is not non-blocking.

The present invention allows for an increase in back plane speed, and high capacity can be implemented at a relatively low cost.

Also, redundant TDM bus, multicasting and broadcasting (one transmitter and several receivers) are permitted.

### Abbreviation

- E1: 2 Mbit/s data transfer method
- LINE: Serial data lines, i.e. E1, STM-1 etc.
- PFU: Power Feeding Unit
- STM-1: Synchronous Transfer Mode
- TDM: Time Division Multiplexing

## Claims

1. An arrangement applied to a node in a communication network, said node comprising one or more time-slot buses transferring frames from a number of serial input lines located on a receiving side of the node to a number of serial output lines located on the transmitting side of the node, said arrangement comprising
one or two data buffers for each time-slot bus at the receiving side buffering the frames from the input lines before transmission,
**characterized in**
connection table for each time-slot bus at the receiving side, each entry in the connection table containing at least a data address pointing to a byte in the associated data buffer, the entries are arranged in the same order as their corresponding bytes are to be transferred on the data bus, and
a counter, synchronized to a clock used by the time-slot bus for transmission of time slots, indicating which byte in the associated data buffer that presently is to be read out from the data-bus buffer into a time slot in the associated data bus by indexing the entries of the connection table.

2. Arrangement according to claim 1,
**characterized in that** the data buffers are shared between all the input lines by means of respective pointers allocating one memory area in the data buffer for each of the input lines.

3. Arrangement according to claim 1 or 2,
**characterized in that** each entry in the connection table contains, in addition to the data address, a control field.

4. Arrangement according to any of the preceding claims,
**characterized in that** there is only one data buffer for each time slot bus, and, within the same frame, a data location in the buffer is not read before write-in.

5. An arrangement applied to a node in a communication network, said node comprising one or more time slot buses transferring frames from a number of serial input lines located on a receiving side of the node to a number of serial output lines located on the transmitting side of the node,
**characterized in**
one or two data buffers for each time-slot bus at the transmitting side buffering the frames from time-slot buses before forwarding to the output line,
a connection table wherein each entry in the connection table contains at least a data address pointing to a byte in one of the data buffers, the entries are arranged in the same order as their corresponding bytes are to be transferred to an output line.

6. Arrangement according to claim 5,
**characterized in**
one starting pointer per output line allocating one memory area in the connection table for each of the output lines, and pointing to the first entry in each memory area,
one indexing pointer per output line pointing at the entry in the connection table holding the address to the byte currently being fetched from one of the buffers to the associated output line.

7. Arrangement according to claim 5 or 6,
**characterized in that** each entry in the connection table contains, in addition to the data address, a control field.

8. Arrangement according to one of the claims 5 - 7,
**characterized in that** there is only one data buffer for each time-slot bus, and, within the same frame, a data location in the buffer is not read before write-in.

9. Arrangement according to one of the claims 5 - 8,
**characterized in that** there is only one data buffer for each time-slot bus, and, within the same frame, a data location in the buffer is not read before write-in.

## Patentansprüche

1. Anordnung, die auf einen Knoten in einem Kommunikationsnetz angewendet wird, der Knoten umfassend einen oder mehr Zeitschlitzbusse, die Rahmen von einer Zahl von seriellen Eingangsleitungen, die sich auf einer empfangenden Seite des Knotens befinden, zu einer Zahl von seriellen Ausgangsleitungen, die sich auf der übertragenden Seite des Knotens befinden, transferieren, die Anordnung umfassend
einen oder mehr Datenpuffer für jeden Zeitschlitzbus auf der empfangenden Seite, die die Rahmen von den Eingangsleitungen vor einer Übertragung puffern
**gekennzeichnet durch**
eine Verbindungstabelle für jeden Zeitschlitzbus auf der empfangenden Seite, jeder Eintrag in der Verbindungstabelle enthaltend mindestens eine Datenadresse, die zu einem Bytes in dem zugehörigen Datenpuffer zeigt, die Einträge in der gleichen Reihenfolge angeordnet sind, wie ihre entsprechenden Bytes auf dem Datenbus zu transferieren sind, und
einen Zähler, synchronisiert zu einem Takt, der **durch** den Zeitschlitzbus verwendet wird für eine Übertragung von Zeitschlitzen, anzeigend das Byte in dem zugehörigen Datenpuffer, was gegenwärtig aus dem Datenbuspuffer in einen Zeitschlitz in dem zugehörigen Datenbus auszulesen ist **durch** Indizieren der Einträge der Verbindungstabelle.

2. Anordnung nach Anspruch 1,
**gekennzeichnet dadurch, dass** die Datenpuffer zwischen allen Eingangsleitungen mittels jeweiliger Zeiger gemeinsam genutzt werden, die einen Speicherbereich in dem Datenpuffer für jede der Eingangsleitungen zuordnen.

3. Anordnung nach Anspruch 1 oder 2,
**gekennzeichnet dadurch, dass** jeder Eintrag in der Verbindungstabelle zusätzlich zu der Datenadresse ein Steuerfeld enthält.

4. Anordnung nach beliebigen der vorangehenden Ansprüche,
**gekennzeichnet dadurch, dass** es nur einen Datenpuffer für jeden Zeitschlitzbus gibt, und innerhalb des gleichen Rahmens eine Datenstelle in dem Puffer vor Einschreiben nicht gelesen wird.

5. Anordnung, angewendet auf einen Knoten in einem Kommunikationsnetz, der Knoten umfassend einen oder mehr Zeitschlitzbusse, die Rahmen von einer Zahl von seriellen Eingangsleitungen, die sich auf einer empfangenden Seite des Knotens befinden, zu einer Zahl von seriellen Ausgangsleitungen, die sich auf der übertragenden Seite des Knotens befinden, transferieren,
**gekennzeichnet durch**
einen oder zwei Datenpuffer für jeden Zeitschlitzbus auf der übertragenden Seite, die die Rahmen von Zeitschlitzbussen vor einer Weiterleitung zu der Ausgangsleitung puffern,
eine Verbindungstabelle, wobei jeder Eintrag in der Verbindungstabelle mindestens eine Datenadresse enthält, die auf ein Byte in einem der Datenpuffer zeigt, die Einträge in der gleichen Reihenfolge angeordnet sind, wie ihre entsprechenden Bytes zu einer Ausgangsleitung zu transferieren sind.

6. Anordnung nach Anspruch 5,
**gekennzeichnet durch**
einen Startzeiger pro Ausgangsleitung, der einen Speicherbereich in der Verbindungstabelle für jede der Ausgangsleitungen zuordnet, und auf den ersten Eintrag in jedem Speicherbereich zeigt,
einen Indexzeiger pro Ausgangsleitung, der auf den Eintrag in der Verbindungstabelle zeigt, der die Adresse zu dem Byte enthält, das gegenwärtig aus einem der Puffer zu der zugehörigen Ausgangsleitung abgerufen wird.

7. Anordnung nach Anspruch 5 oder 6,
**gekennzeichnet dadurch, dass** jeder Eintrag in der Verbindungstabelle zusätzlich zu der Datenadresse ein Steuerfeld enthält.

8. Anordnung nach einem der Ansprüche 5 - 7,
**gekennzeichnet dadurch, dass** es nur einen Datenpuffer für jeden Zeitschlitzbus gibt, und innerhalb des gleichen Rahmens eine Datenstelle in dem Puffer vor Einschreiben nicht gelesen wird.

9. Anordnung nach einem der Ansprüche 5 - 8,
**gekennzeichnet dadurch, dass** es nur einen Datenpuffer für jeden Zeitschlitzbus gibt, und innerhalb des gleichen Rahmens eine Datenstelle in dem Puffer vor Einschreiben nicht gelesen wird.

## Revendications

1. Agencement appliqué à un noeud dans un réseau de communication, ce noeud comprenant un ou plusieurs bus de créneaux temporels transférant des trames à partir d'un certain nombre de lignes d'entrée série se trouvant sur un côté récepteur du noeud, vers un certain nombre de lignes de sortie série se trouvant sur le côté émetteur du noeud, cet agencement comprenant
un ou deux tampons de données pour chaque bus de créneaux temporels du côté récepteur, enregistrant en tampon les trames provenant des lignes d'entrée, avant l'émission,
**caractérisé par**
une table de connexions pour chaque bus de créneaux temporels du côté récepteur, chaque article dans la table de connexions contenant au moins une adresse de données pointant vers un octet dans le tampon de données associé, les articles étant disposés dans l'ordre dans lequel leurs octets correspondants doivent être transférés sur le bus de données, et
un compteur, synchronisé sur une horloge utilisée par le bus de créneaux temporels pour l'émission de créneaux temporels, indiquant quel octet dans le tampon de données associé doit être lu au moment présent dans le tampon de bus de données pour être placé dans un créneau temporel dans le bus de données associé, en indexant les articles de la table de connexions.

2. Agencement selon la revendication 1,
**caractérisé en ce que** les tampons de données sont partagés entre toutes les lignes d'entrée au moyen de pointeurs respectifs allouant une zone de mémoire dans le tampon de données pour chacune des lignes d'entrée.

3. Arrangement selon la revendication 1 ou 2,
**caractérisé en ce que** chaque article dans la table de connexions contient un champ de commande, en plus de l'adresse de données.

4. Agencement selon l'une quelconque des revendications précédentes,
**caractérisé en ce qu'**il y a un seul tampon de données pour chaque bus de créneaux temporels, et, à l'intérieur de la même trame, un emplacement de données dans le tampon n'est pas lu avant l'écriture.

5. Agencement appliqué à un noeud dans un réseau de communication, ce noeud comprenant un ou plusieurs bus de créneaux temporels transférant des trames à partir d'un certain nombre de lignes d'entrée série se trouvant sur un côté récepteur du noeud, vers un certain nombre de lignes de sortie série se trouvant sur le côté émetteur du noeud,
**caractérisé par**
un ou deux tampons de données pour chaque bus de créneaux temporels du côté émetteur, enregistrant en tampon les trames provenant de bus de créneaux temporels avant de les diriger vers la ligne de sortie, une table de connexions dans laquelle chaque article dans la table de connexions contient au moins une adresse de données pointant vers un octet dans l'un des tampons de données, les articles étant disposés dans l'ordre dans lequel leurs octets correspondants doivent être transférés vers une ligne de sortie.

6. Agencement selon la revendication 5,
**caractérisé par**
un pointeur de départ par ligne de sortie, allouant une zone de mémoire dans la table de connexions pour chacune des lignes de sortie, et pointant vers le premier article dans chaque zone de mémoire,
un pointeur d'indexation par ligne de sortie, pointant vers l'article dans la table de connexions conservant l'adresse de l'octet qui est extrait au moment présent à partir de l'un des tampons vers la ligne de sortie associée.

7. Agencement selon la revendication 5 ou 6,
**caractérisé en ce que** chaque article dans la table de connexions contient un champ de commande, en plus de l'adresse de données.

8. Agencement selon l'une quelconque des revendications 5 - 7,
**caractérisé en ce qu'**il y a un seul tampon de données pour chaque bus de créneaux temporels et, à l'intérieur de la même trame, un emplacement de données dans le tampon n'est pas lu avant l'écriture.

9. Agencement selon l'une quelconque des revendications 5 - 8,
**caractérisé en ce qu'**il y a un seul tampon de données pour chaque bus de créneaux temporels et, à l'intérieur de la même trame, un emplacement de données dans le tampon n'est pas lu avant l'écriture.
